# EUROPÄISCHE PATENTSCHRIFT

(11) **EP 1 868 843 B1**
(45) Veröffentlichungstag und Bekanntmachung des Hinweises auf die Patenterteilung: **08.06.2011**
(21) Anmeldenummer: 06723698.4
(22) Anmeldetag: 24.03.2006
(51) Int. Cl.: B60N 2/56, B60N 2/70, B29C 33/10, B29C 70/38, B29C 70/78

(54) **POLSTERELEMENT UND HERSTELLVERFAHREN**
UPHOLSTERY ELEMENT AND PRODUCTION PROCESS
ELEMENT DE REMBOURRAGE ET PROCEDE ASSOCIE

(30) Priorität: 04.04.2005 DE 102005015473
(43) Veröffentlichungstag der Anmeldung: 26.12.2007
(73) Patentinhaber: Johnson Controls GmbH, 51399 Burscheid (DE)
(72) Erfinder: JANZ, Michael, 32609 Hüllhorst (DE)
(74) Vertreter: Hemmelmann, Klaus
(86) Internationale Anmeldenummer: PCT/EP2006/002718
(87) Internationale Veröffentlichungsnummer: WO 2006/105874

(56) Entgegenhaltungen:
- EP-A- 0 688 641
- DE-A1- 10 255 453
- DE-C2- 19 508 167
- GB-A- 880 554
- US-A- 5 403 065
- US-A- 5 544 942
- US-A1- 2004 244 903
- PATENT ABSTRACTS OF JAPAN Bd. 017, Nr. 275 (M-1418), 27. Mai 1993 (1993-05-27) -& JP 05 008234 A (KANTO AUTO WORKS LTD), 19. Januar 1993 (1993-01-19)

## Beschreibung

Die Erfindung betrifft ein Polsterelement, beispielsweise eine Rückenlehne oder ein Sitzteil, für einen Sitz, insbesondere eines Kraftfahrzeugs, bestehend aus mittels eines Bindemittels zu einem vorzugsweise luftdurchlässigen Formteil verbundenen Fasern und einer sitzflächenseitig auf dem Formteil angeordneten, flächigen Abstandshalterkomponente, sowie ein Verfahren zu dessen Herstellung.

### Stand der Technik

Ein gattungsgemäßer Polsterelement ist aus der GB 880 554 A bekannt.

Ein Herstellverfahren für ein Polsterelement ist auch aus der Praxis bekannt. So wird in der Zeitschrift ABB connect, Ausgabe 03/2003 ein Verfahren zur Herstellung eines Polsterelements aus Fasern und Latex beschrieben, bei welchem ein mit einem speziellen Mischkopf versehener Roboter eine erste Lage aus Fasern und Latex in ein Werkzeug streut. Anschließend stempelt er mit Aluminium-Formbacken die Kopfgeometrie und Seitenwangen der Rückenlehne eines Fahrzeugsitzes vor und streut die Hohlräume wieder zu. Das sich nachfolgend schließende Werkzeug bildet die vollständige Geometrie aus.

Üblicherweise wird vor dem Einstreuen ein dünnes Vlies in das Werkzeug eingelegt, welches ein Verkleben des Latex mit der Oberfläche des Werkzeugs verhindert. Anschließend wird zur Trocknung der sprühfähigen Emulsion aus Wasser und Latex Luft durch das Formteil geblasen. Der so erzeugte, aus einem wirren und locker angeordneten Verbund aus Fasern bestehende Polsterkörper wird zur Vulkanisation des Latex in einen Autoklaven verbracht und kann nachfolgend vliesseitig durch Klebekaschierung mit einem Abstandsgewirke versehenen werden.

Derartige Polsterkörper werden für anspruchsvolle, passiv oder aktiv klimatisierte Fahrzeugsitze verwendet und erfüllen höchste Ansprüche an den Sitzkomfort. Darüber hinaus sind diese Polsterteile problemlos recyclebar. Die Fertigungszeit hängt dabei in erheblichem Maße vom Zeitbedarf für die Trocknung der Emulsion ab.

In der Druckschrift DE 195 08 167 C2 wird ferner ein Verfahren zur Herstellung eines Formteils aus mit Bindemittel vermischtem Naturfasermaterial offenbart, bei welchem ein wässriges Bindemittel mit den Fasern in einer Form zu einem Formteil verpresst und nachfolgend außerhalb der Form getrocknet und vulkanisiert wird. Eine zusätzliche Abstandshalterkomponente ist bei diesem Formteil nicht vorgesehen.

### Aufgabe

Der Erfindung liegt die Aufgabe zugrunde, die Fertigung derartiger hochwertiger Polsterkörper zu rationalisieren.

### Lösung

Die Aufgabe wird bei einem gattungsgemäßen Polsterkörper dadurch gelöst, dass die Fasern des Formteils und die Abstandshalterkomponente durch das Bindemittel unmittelbar miteinander verbunden sind. Einerseits wird hierdurch das eingangs beschriebene Vlies eingespart, da ein Kontakt zwischen dem Bindemittel und der Werkzeugoberfläche vermieden wird. Andererseits kann sich die zur Trocknung in das Werkzeug eingeblasene Luft zwischen der Werkzeugoberfläche und dem Faserkörper in der Abstandshalterkomponente oberflächenparallel verteilen und erreicht somit auch entlegene und verwinkelte Bereiche des Polsterkörpers. Hierdurch kann die vor Entnahme des Formteils erforderliche Trocknungszeit erheblich reduziert werden. Ferner entfällt das manuelle Kaschieren der Abstandshalterkomponente unter Verwendung eines Klebers.

Die flächige Abstandshalterkomponente ist dabei als Abstandsgewirke ausgebildet, also einem aus gewundenen, fadenförmigen Halbzeugen hergestellten Flächengebilde, das zwischen seinen beabstandeten Flächenseiten einen relativ großen freien Querschnittsanteil aufweist, jedoch eine Kraftübertragung zwischen den Flächenseiten zulässt. Ein geeignetes Abstandsgewirke ist beispielsweise aus der Druckschrift DE 199 03 070 A1 bekannt.

Ein vorteilhaftes Abstandsgewirke hat in unverpresstem Zustand eine Dicke von 5 bis 15 mm, vorzugsweise etwa 10 mm. Der freie Querschnitt eines derartigen Abstandsgewirkes lässt für die erfindungsgemäße Anwendung einen ausreichenden Luftstrom parallel zu den Flächenseiten zu.

Das Bindemittel enthält bevorzugt flüssig applizierbaren natürlichen oder synthetischen Latex. Die Faser sind vorzugsweise zumindest teilweise natürlichen Ursprungs und bestehen mit Vorteil zumindest teilweise aus Kokos, Flachs oder tierischen Borsten. Die Länge der Faser kann 5 bis 15 cm, vorzugsweise 7,5 bis 12,5 cm, insbesondere etwa 10 cm betragen.

Bei einem Verfahren zur Herstellung eines derartigen Polsterelements wird die flächige Abstandshalterkomponente in die Kavität eines geöffneten Werkzeugs eingelegt und mit den Fasern bestreut. Anschließend wird das Bindemittel aufgesprüht. Durch Schließen des Werkzeugs wird der Verbund nachfolgend verpresst. Die bereits auf Endmaß geschnittenen Fasern werden vorzugsweise in Form eines verdrillten Strangs bereitgestellten und vor dem Einstreuen in das Werkzeug durch gegenläufiges Winden des Strangs gesondert. Ein zusätzlicher Schnittvorgang ist somit nicht erforderlich. Grundsätzlich ist es natürlich auch möglich, einen anderen Anlieferzustand (Ballen oder dergleichen) zu wählen.

Fasern und/oder Bindemittel werden dem Werkzeug bevorzugt mittels eines Roboters automatisch zugeführt.

Nach dem Schließen des Werkzeugs wird zur Trocknung des Bindemittels Luft in die gefüllte Kavität eingeblasen, die sich über die Abstandshalterkomponente im Polsterelement verteilt und einen gleichmäßigen Trocknungsvorgang bewirkt. Zur weiteren Verkürzung der Trocknungszeit kann vorgesehen werden, dass die Luft vor dem Einblasen getrocknet und/oder erwärmt wird.

### Figuren

Die Figuren stellen beispielhaft und schematisch verschiedene Ausführungen der Erfindung dar.

Es zeigen:
- Fig. 1: den Aufbau einer zur Durchführung des erfindungsgemäßen Verfahrens geeigneten Anlage,
- Fig. 2: den Verfahrensablauf bei der Herstellung des Polsterelements.

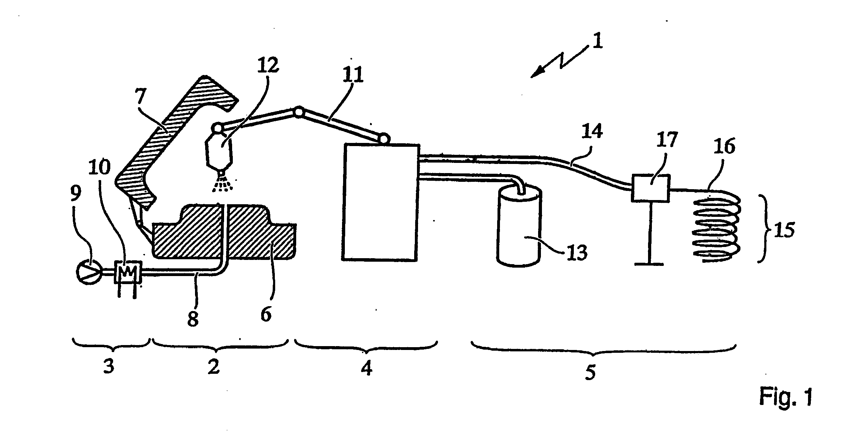

Die in Fig. 1 dargestellte Fertigungsanlage 1 besteht aus einem Werkzeug 2, einem Lufterzeuger 3, einem Roboter 4 und einer Einrichtungen 5 zur Bereitstellung von Fasern und Bindemittel. Das Werkzeug 2 ist im Ausführungsbeispiel zweiteilig aufgebaut und weist ein Unterwerkzeug 6 sowie ein davon abhebbares Oberwerkzeug 7 auf. In geschlossenem Zustand bilden Ober- und Unterwerkzeug (6, 7) eine komplex geformte Kavität aus. In diese mündet vom Unterwerkzeug 6 her ein Luftkanal 8 ein, der mit dem Lufterzeuger 3 verbunden ist. Der Lufterzeuger 3 besteht aus einem Gebläse 9 und einer nachfolgenden Einrichtung 10 zur Trocknung und Erwärmung der Luft. Auf diese Weise kann Trocknungsluft in die Kavität des geschlossenen Werkzeugs eingeblasen werden, die über die Trennebene zwischen Unter- und Oberwerkzeug (6, 7) wieder entweicht.

Der Roboter 4 ist mit einem Arm 11 ausgestattet, der ein in mehreren Achsen bewegbares Sprühwerkzeug 12 trägt und dazu geeignet ist, dieses bei geöffnetem Werkzeug 2 über dem Unterwerkzeug 6 zu bewegen und somit alle dem Unterwerkzeug 6 zugeordneten Bereiche der Kavität zu besprühen. Dem Sprühwerkzeug 12 werden einerseits aus einem Behälter 13 eine bindemittelhaltige Emulsion und weiterhin über eine Leitung 14 endliche Fasern zugeführt. Die bereits auf Länge geschnittenen Fasern werden auf einem Haspel 15 in Form eines verdrillten Strangs 16 angeliefert und in einer mit der Leitung 14 verbundenen Vorrichtung 17 durch gegenläufiges Winden des Strangs 16 in Einzelfasern gesondert. Im Sprühkopf 12 werden Bindemittel und Faser zeitgleich mittels Druckluft in das Unterwerkzeug 6 eingetragen.

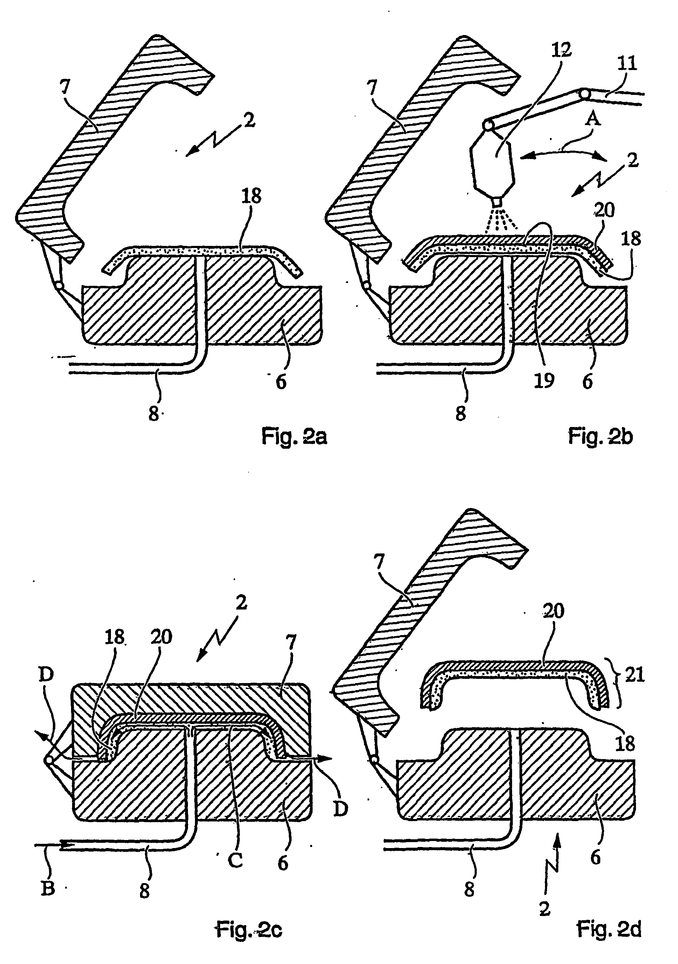

Wie aus den Figuren 2a bis 2d ersichtlich, wird bei der Durchführung des Verfahrens zuerst ein Zuschnitt der flächigen Abstandshalterkomponente 18 auf das Unterwerkzeug 6 aufgelegt. Dieser Vorgang kann manuell oder automatisiert erfolgen (Fig. 2a). Anschließend werden, wie in Fig. 2b gezeigt, mittels des Sprühkopfs 12 die bindemittelhaltige Emulsion sowie die Fasern auf die Abstandshalterkomponente 18 derart aufgetragen, dass sich auf deren Oberfläche 19 eine relativ dicke, wirre Schicht 20 von mit Bindemittel benetzten Fasern ausbildet. Die Schwenkbewegungen des Sprühkopfes 12 sind durch den Pfeil A angedeutet. Durch Schließen des Werkzeugs (Fig. 2b) werden die Abstandshalterkomponente 18 und die Schicht 20 zu einem komplexen Formkörper gepresst (Fig. 2c). Nicht dargestellte Schieber im Werkzeug 2 können dabei Bereiche des Formkörpers in besonderer Weise umformen oder verdichten.

Die über den Luftkanal 8 im Unterwerkzeug 6 zugeführte Trocknungsluft (Pfeil B) kann sich in der Abstandshalterkomponente 18 parallel zur deren Flächenseiten verteilen (durch Pfeile B angedeutet) und im Bereich der Trennung zwischen Unter- und Oberwerkzeug (6, 7) sowie durch nicht dargestellte Entlüftungsbohrungen im Oberwerkzeug 7 nach außen entweichen (durch Pfeil D angedeutet). Dabei wird der aufgesprühten Emulsion von der Trocknungsluft soviel Wasser entzogen, dass die Schicht 20 zu einem zwar elastischen, aber formstabilen Formkörper trocknet, welcher ohne weitere Maßnahmen mit der Abstandshalterkomponente 18 über das Bindemittel verbunden ist. Die wirren Fasern sind dabei so voneinander beabstandet, dass auch die Schicht 20 luftdurchlässig ist, auch wenn deren Strömungswiderstand (bei Strömung parallel zur Flächenseite betrachtet) deutlich größer als innerhalb der Abstandshalterkomponente 18 ist. Wie in Fig. 2d dargestellt, kann das so entstandene Polsterelement 21 nach dem Öffnen des Werkzeugs 2 entnommen werden. Die endgültige Aushärtung des Bindemittels (Vulkanisation des Latex) findet später in gesonderten Öfen statt.

Das erfindungsgemäß gefertigte Polsterelement 21 ist in besonderer Weise zum Einsatz in klimatisierten Sitzen, insbesondere als Auflage auf Schaumpolstern von Kraftfahrzeugsitzen, geeignet, wobei die Abstandshalterkomponente 18 eine gleichmäßige Verteilung der Luftströmung zulässt.

### Bezugszeichen

- 1: Fertigungsanlage
- 2: Werkzeug
- 3: Lufterzeuger
- 4: Roboter
- 5: Einrichtung (zur Bereitstellung von Fasern und Bindemittel)
- 6: Unterwerkzeug
- 7: Oberwerkzeug
- 8: Luftkanal
- 9: Gebläse
- 10: Einrichtung (Trocknung und Erwärmung der Luft)
- 11: Arm
- 12: Sprühwerkzeug
- 13: Behälter
- 14: Leitung
- 15: Haspel
- 16: Strang
- 17: Einrichtung (zum Sondern der Fasern)
- 18: Abstandshalterkomponente
- 19: Oberfläche (der Abstandshalterkomponente)
- 20: Schicht (aus wirren, benetzten Fasern)
- 21: Polsterelement

## Patentansprüche

1. Polsterelement (21) zur Auflage auf das Schaumpolster eines Sitzes, insbesondere eines Kraftfahrzeugs, bestehend aus mittels eines Bindemittels zu einem vorzugsweise luftdurchlässigen Formteil (20) verbundenen Fasern und einer sitzflächenseitig auf dem Formteil (20) angeordneten, flächigen Abstandshalterkomponente (18), **dadurch gekennzeichnet, dass** die Fasern des Formteils und die Abstandshalterkomponente (18) durch das Bindemittel unmittelbar miteinander verbunden sind und wobei
die flächige Abstandshalterkomponente (18) als Abstandsgewirke ausgebildet ist.

2. Polsterelement nach Anspruch 1, **dadurch gekennzeichnet, dass** die Abstandshalterkomponente (18) in unverpresstem Zustand eine Dicke von 5 bis 15 mm, vorzugsweise etwa 10 mm aufweist.

3. Polsterelement nach Anspruch 1 oder 2, **dadurch gekennzeichnet, dass** das Bindemittel flüssig applizierbaren natürlichen oder synthetischen Latex enthält.

4. Polsterelement nach einem der vorhergehenden Ansprüche, **dadurch gekennzeichnet, dass** die Fasern zumindest teilweise natürlichen Ursprungs sind.

5. Polsterelement nach Anspruch 4, **dadurch gekennzeichnet, dass** die Fasern zumindest teilweise aus Kokos, Flachs oder tierischen Borsten bestehen.

6. Polsterelement nach einem der vorhergehenden Ansprüche, **dadurch gekennzeichnet, dass** die Fasern eine Länge von 5 bis 15 cm, vorzugsweise 7,5 bis 12,5 cm, insbesondere etwa 10 cm aufweisen.

7. Verfahren zur Herstellung eines Polsterelements nach Anspruch 1, **dadurch gekennzeichnet, dass** die flächige Abstandshalterkomponente (18) in die Kavität eines geöffneten Werkzeugs (2) eingelegt, mit den Fasern bestreut, mit dem Bindemittel besprüht, anschließend durch Schließen des Werkzeugs verpresst und nachfolgend auf das Schaumpolster eines Sitzes aufgelegt wird.

8. Verfahren nach Anspruch 7, **dadurch gekennzeichnet, dass** die in Form eines verdrillten Strangs (16) bereitgestellten Fasern vor dem Einstreuen in das Werkzeug (2) durch gegenläufiges Winden des Strangs (16) gesondert werden.

9. Verfahren nach Anspruch 7 oder 8, **dadurch gekennzeichnet, dass** Fasern und/oder Bindemittel dem Werkzeug (2) mittels eines Roboters (4) automatisch zugeführt werden.

10. Verfahren nach Anspruch 7 bis 9, **dadurch gekennzeichnet, dass** nach dem Schließen des Werkzeugs (2) zur Trocknung des Bindemittels Luft in die gefüllte Kavität eingeblasen wird.

11. Verfahren nach Anspruch 10, **dadurch gekennzeichnet, dass** die Luft vor dem Einblasen getrocknet und/oder erwärmt wird.

## Claims

1. Upholstery element (21) for positioning on the foam upholstery of a seat, in particular of a motor vehicle, consisting of fibers which are bonded by means of a binder to form a preferably air-permeable molding (20) and a sheet-like spacer component (18) which is arranged on the seating surface side of the molding (20), **characterized in that** the fibers of the molding and the spacer component (18) are directly bonded to one another by the binder and where the sheet-like spacer component (18) is configured as spacer fabric.

2. Upholstery element according to Claim 1, **characterized in that** the spacer component (18) in the non-compressed state has a thickness of 5 to 15 mm, preferably approximately 10 mm.

3. Upholstery element according to Claim 1 or 2, **characterized in that** the binder contains natural or synthetic latex which may be applied in liquid form.

4. Upholstery element according to one of the preceding claims, **characterized in that** the fibers are at least partially of natural origin.

5. Upholstery element according to Claim 4, **characterized in that** the fibers consist at least partially of coir, flax or animal bristles.

6. Upholstery element according to one of the preceding claims, **characterized in that** the fibers have a length of 5 to 15 cm, preferably 7.5 to 12.5 cm, in particular approximately 10 cm.

7. Process for producing an upholstery element according to Claim 1, **characterized in that** the sheet-like spacer component (18) is placed in the cavity of an open die (2), scattered with the fibers, sprayed with the binder, subsequently compressed by closing the die and then positioned on the foam upholstery of a seat.

8. Process according to Claim 7, **characterized in that** the fibers provided in the form of a twisted strand (16) are separated by counterdirectional winding of the strand (16) before scattering into the die (2).

9. Process according to Claim 7 or 8, **characterized in that** fibers and/or binder are automatically supplied to the die (2) by means of a robot (4).

10. Process according to Claims 7 to 9, **characterized in that** after closing the die (2), for drying the binder, air is blown into the filled cavity.

11. Process according to Claim 10, **characterized in that** the air is dried and/or heated before being blown in.

## Revendications

1. Elément de rembourrage (21) à poser sur le coussin de mousse d'un siège, en particulier d'un véhicule automobile, se composant de fibres assemblées au moyen d'un liant en une pièce moulée (20) de préférence perméable à l'air, et d'un composant d'écartement plat (18) disposé sur la pièce moulée (20) du côté de la surface du siège, **caractérisé en ce que** les fibres de la pièce moulée et le composant d'écartement (18) sont assemblés directement entre eux au moyen du liant, et dans lequel le composant d'écartement plat (18) est réalisé sous la forme d'un maillage d'écartement.

2. Elément de rembourrage selon la revendication 1, **caractérisé en ce que** le composant d'écartement (18) présente, à l'état non comprimé, une épaisseur de 5 à 15 mm, de préférence d'environ 10 mm.

3. Elément de rembourrage selon la revendication 1 ou 2, **caractérisé en ce que** le liant contient un latex naturel ou synthétique applicable à l'état liquide.

4. Elément de rembourrage selon l'une quelconque des revendications précédentes, **caractérisé en ce que** les fibres sont, au moins en partie, d'origine naturelle.

5. Elément de rembourrage selon la revendication 4, **caractérisé en ce que** les fibres se composent au moins en partie de fibres de coco, de lin ou de poils d'animaux.

6. Elément de rembourrage selon l'une quelconque des revendications précédentes, **caractérisé en ce que** les fibres présentent une longueur de 5 à 15 cm, de préférence de 7,5 à 12,5 cm, en particulier d'environ 10 cm.

7. Procédé de fabrication d'un élément de rembourrage selon la revendication 1, **caractérisé en ce que** l'on pose le composant d'écartement plat (18) dans la cavité d'un outil ouvert (2), on y répand les fibres, on l'arrose de liant, on le comprime ensuite en fermant l'outil et on le dépose enfin sur le coussin de mousse d'un siège.

8. Procédé selon la revendication 7, **caractérisé en ce que** l'on dissocie les fibres, préparées sous la forme d'un cordon torsadé (16), par une torsion en sens contraire du cordon (16) avant de les répandre dans l'outil (2).

9. Procédé selon la revendication 7 ou 8, **caractérisé en ce que** l'on fournit des fibres et/ou du liant à l'outil (2) de manière automatique au moyen d'un robot (4) .

10. Procédé selon une revendication 7 à 9, **caractérisé en ce que** l'on insuffle de l'air dans la cavité remplie, après la fermeture de l'outil (2), afin de sécher le liant.

11. Procédé selon la revendication 10, **caractérisé en ce que** l'on sèche et/ou on chauffe l'air avant de l'insuffler.
